# EUROPEAN PATENT SPECIFICATION

(11) **EP 1 277 523 B1**
(45) Date of publication and mention of the grant of the patent: **20.09.2006**
(21) Application number: 02077804.9
(22) Date of filing: 03.07.2002
(51) Int. Cl.: B08B 15/02, B08B 17/00

(54) **A method for removing tubes containing asbestos**
Verfahren zum Entfernen von Asbest enthaltenden Rohren
Procédé d'enlèvement de conduites contenant de l'amiante

(30) Priority: 16.07.2001 NL 1018549
(43) Date of publication of application: 22.01.2003
(73) Proprietor: Mulder Milieu en Asbest B.V., 6915 BG Lobith (NL)
(72) Inventor: Mulder, Petrus Gerardus Johannes Maria, 6915 BG Lobith (NL)
(74) Representative: Schumann, Bernard Herman Johan

(56) References cited:
- DE-A- 4 305 445
- GB-A- 2 349 933
- NL-A- 8 902 959
- US-A- 3 589 468

## Description

The invention lies in the field of removing tubes which are incorporated in a building structure and which consist of asbestos, or at least a composition containing asbestos.

As is known, asbestos is a hazardous material in the sense that when it is touched or processed asbestos fibres can be released into the air which, when breathed in, result in great health hazards. In this respect regulations and laws have been introduced by governments which have the object of limiting the concentration of asbestos fibres in the air to a chosen value and of proposing measures serving for this purpose. Such measures can for instance consist of respiratory protection, for instance dust masks and the like, and in serious cases even the use of wholly dustproof suits. Such measures have the consequence that processing of asbestos is time-consuming and very expensive. It is an object of the invention to embody the removal of a tube containing asbestos from a building structure such that under all conditions the concentration of the asbestos fibres in the air, i.e. the number of fibres with a determined size distribution per unit of volume, lies below the set standard value, so that the use of asbestos-tight suits and even simple means such as respiratory protection are no longer necessary.

In respect of this objective the invention provides a method for removing a tube containing asbestos from a building structure in dust-free manner, which method comprises the following steps, to be performed in suitable sequence, of:
(a) connecting a vacuum cleaner to the tube and setting into operation thereof;
(b) wrapping the tube over the whole free length thereof with dustproof foil material and adhering this foil material dust-tightly to the tube at least at the ends of this free length;
(c) choosing at least one severing zone at least in the region of one of said ends where the tube has to be cut through such that a tube part defined by the relevant severing zone and another zone where the tube can be detached from its environment, for instance a second severing zone, can be removed and disposed of;
(d) adhering to the tube around each severing zone a severing sleeve comprising an envelope filled with a sticky material such that the severing sleeve is connected dust-tightly to the tube above and below each severing zone;
(e) after step (d), cutting wholly through the tube and the severing sleeve in each severing zone and removing each tube part between two cut-through severing zones.
   DE-A-43 05 445 discloses a device and method for severing and removing asbestos concrete tubes and tubes of similar material. Thereto use is made of a sleeve consisting of two relatively movable sleeve parts. In the space defined by the sleeve in a severing zone the tube is cut through by means of hammerheads hammering the tube over its entire circumference until the total severing has taken place of the two thus remaining tube parts. Water is used to more or less bind dust and debri caused by the hammering operation. This prior art specification remains silent about the way in which the dangerous dust and debri is safely removed. Finally the remaining tube ends are pulled out of the sleeve.
   This prior art specification differs from the present invention in that no use is made of steps (a), (b) and (d).
   Furthermore reference is made to NL-A-89 02959. From this prior art specification a method and device is known for processing an object comprising materials dangerous for the health of humans. Thereto use is made of a casing adapted to at least partially enclose the object in order to prevent harmful materials to migrate to the outside of the casing during the processing. Preferably the internal space of the casing is filled with a granular material like sand in order to catch the harmful materials. The object to be processed may be a tube that is severed in a severing zone by means of a saw.
   Comparing this prior art reference with the present invention it appears that it does not disclose the following method steps according to the invention: (a), (b) and (d).
   In a preferred embodiment the method comprises the step of
(f) arranging a dust cap over at least one open end of the tube prior to step (e).
   As already specified above, the tube is cut through in each severing zone. This formulation implies that preferably no use is made of machining means or other methods in which there is the danger of asbestos fibres being released into the air in large quantities, for instance sawing or grinding. In this respect the method according to the invention is preferably embodied making use of the step of
   (g) performing step (b) such that the foil material has an additional length in the region of each severing zone, and that the relevant additional foil material is used during removal of the relevant tube part as according to step (e) to seal the relevant free end completely and dust-tightly.
   A preferred embodiment of the method according to the present invention comprises the step of
(h) performing step (e) with a cutting head comprising a rotatingly driven ring of metal cutting wheels.
   Such a ring can be adapted to the diameter of the tube by being embodied as a chain with links which carry the metal cutting wheels.
   A specific embodiment of the method according to the invention comprises the step of
(i) performing step (d) such that the severing sleeve consists of a hollow flexible ring with a filling of foam material which is impregnated with a sticky substance.
   The sticky substance must be of a type which is suitable for binding asbestos fibres. The word "sticky" should therefore be interpreted in a relatively broad sense. A viscous liquid is envisaged at this moment, but the use of liquids and relatively solid adhesives cannot be precluded within the scope of the invention.
   To the extent this is deemed necessary, the method can be further supplemented with the step of
(j) cleaning a tube part, or at least the inner surface thereof, prior to the disposal thereof, for instance by means of the vacuum cleaner used in step (a).
   In a further development the method according to the invention comprises the step of
(k) performing step (a) while applying a T-piece optionally provided with a valve, for instance a slide valve, for connecting a waste bag to the underside of the tube, whereby, after use of the vacuum cleaner and the removal of an abutting tube part, tube remnants can be hacked away or otherwise dislodged and collected in the waste bag.

The severing sleeve according to step (d) is also referred to as "severing bandage".

The pipe or tube for removal is first wrapped in foil material and the severing bandage is arranged. After connecting and switching on the vacuum cleaner, the tube is wholly cut through in the region of the severing bandage. A bag is then pushed between the cutting seam and adhered dust-tightly to the tube by means of adhesive tape. The tube, which generally also has a vertical directional component, is for instance moved carefully in order to dislodge it at the top from the bore. Once the tube is released the vacuum cleaner is disconnected and taped up, whereafter a bag is placed over the tube (including a possible dust cap which may be present) and adhered to the tube by means of adhesive tape. The tube with the dust cap is disposed of. The passage at the top (for instance a roof) is then impregnated with the sticky material to bind possibly present asbestos fibres. The lower part of the severing bandage is then wrapped. The pipe is then vacuumed clean on the inside, which can take place easily by employing the available vacuum cleaner. A flexible provisional connection is then arranged.

The above described method relates to making only one cut and releasing the relevant tube part on the other side without a severing operation being necessary for the purpose. It will be apparent how the method has to be adapted in order to remove a tube part defined by two severing zones at a mutual distance.

The method will generally be applied on tubes and pipes with a vertical component. The tube in question can extend wholly vertically, but also have a horizontal directional component.

In the case where use is made of two severing zones, one at the top and one at the bottom, the method is, as stated, adapted. The top and the bottom of the tube are provided with dust caps. Vacuum cleaners are connected to the dust caps. The pipe is wrapped, severing bandages are arranged. The tube is wrapped with foil material and cut through at the position of the upper severing bandage. A dust bag is then pushed between the cutting seam and adhered to the tube by means of adhesive tape. The top side of the severing zone is also taped up. The tube is cut through and closed in dust-tight manner along the severing zone on the underside in accordance with the same procedure. The tube part between the severing zones can now be removed.

Further details will be elucidated with reference to the annexed drawings. In the drawings:
Fig. 1A shows a cross-section through a part of a building structure through which runs an asbestos tube for removal;
Fig. 1B shows a view corresponding to Fig. 1A of a building structure with another type of tube;
Fig. 2 shows a view corresponding to Fig. 1A of the situation in which a start has been made on performing the method according to the present invention;
Fig. 3 shows a view corresponding to Fig. 1B of the stage of the process as according to Fig. 2;
Fig. 4 shows a cross-section through the tube after arranging of a dust sleeve;
Fig. 5 shows a cross-section through a tube stub or tube part after performing a cutting operation as according to the following Fig. 6 and sealing thereof in foil material;
Fig. 6 shows the severing zone as according to C in Fig. 2 around which a cutting chain is arranged so as to perform the cutting operation;
Fig. 7 shows on enlarged scale a detail of the situation shown in Fig. 2;
Fig. 8 is a hybrid view of detail A of Fig. 3 at the stage where the upper tube stub is removed.

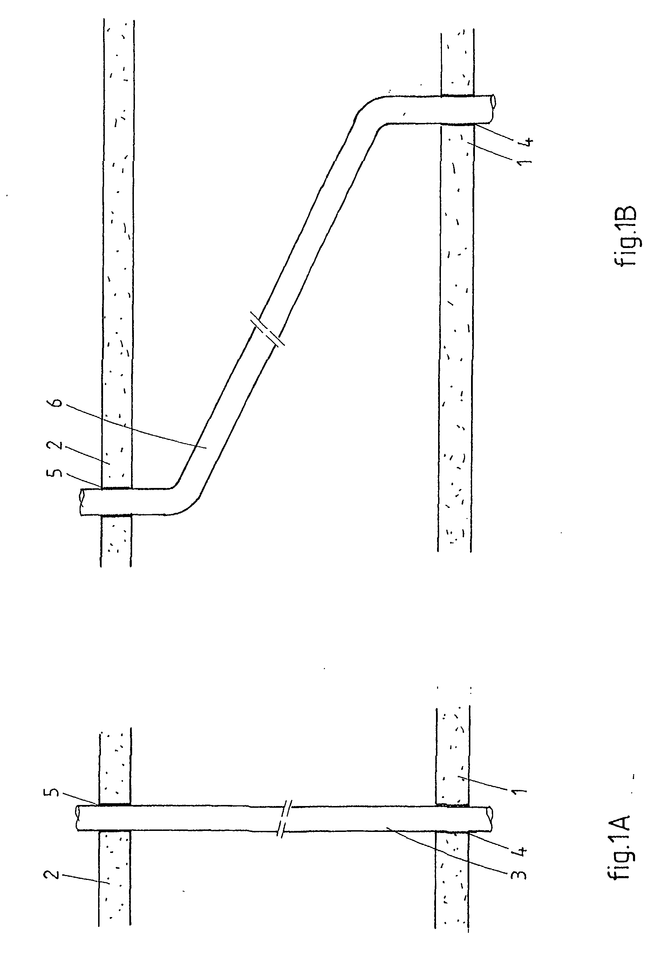

Fig. 1A shows a concrete floor 1 and a concrete ceiling 2, through which floor and which ceiling a vertical asbestos tube 3 extends via respective bores 4 and 5.

In the situation shown in Fig. 1B the tube 6 does not extend wholly vertically but also has a horizontal directional component. It connects via bends to vertical parts extending through the respective bores 4 in floor 1 and 5 in ceiling 2.

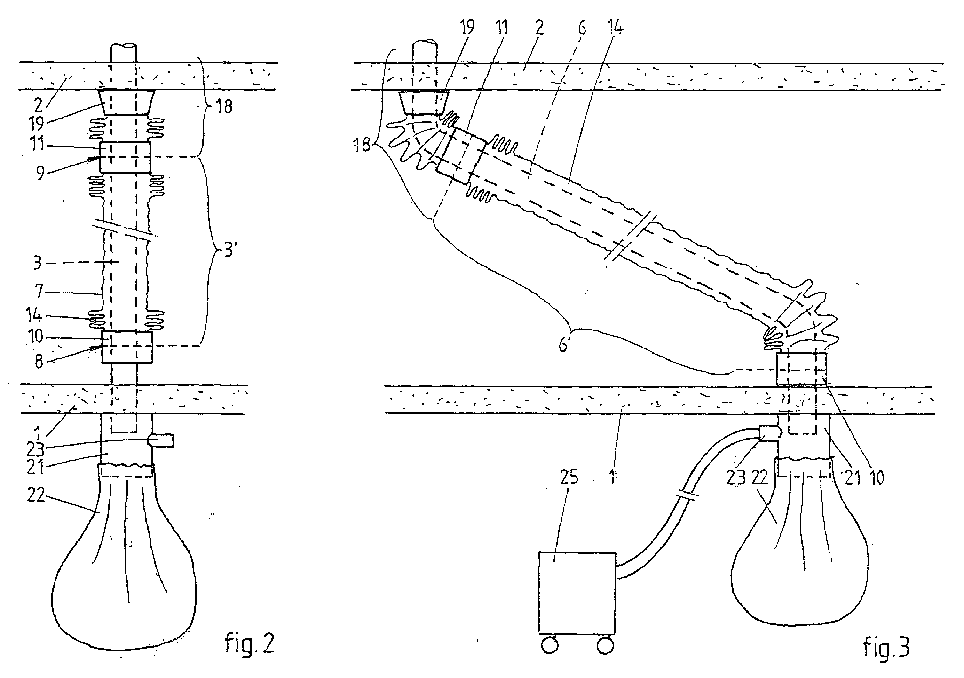

For removal of tube 3 according to Fig. 1A a plastic foil strip 7 is wrapped around tube 3 in the manner shown in Fig. 2 in a manner such that additional foil material is available at the ends of severing zones 8, 9 to be defined below, which material will later serve for dust-tight sealing of the relevant released tube end. The foil material applied for strip 7 can if desired take a slightly adhesive form on one side. This is not strictly necessary but can facilitate the operation and the dust-tight sealing. The foil material can be for instance PVC.

Following or prior to arranging of the foil envelope in the manner shown in Fig. 2, severing sleeves are arranged in the region of the intended severing zones. These are designated schematically in Fig. 2 with respectively 10 and 11.

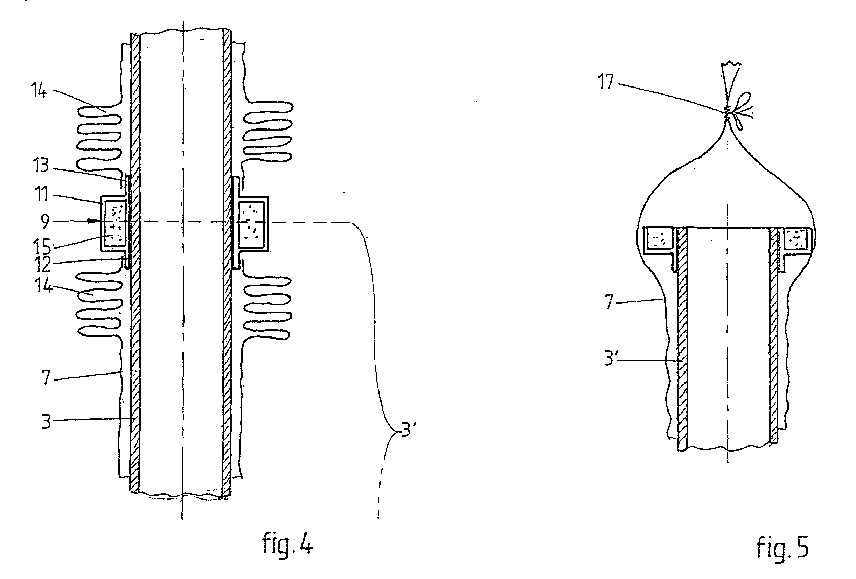

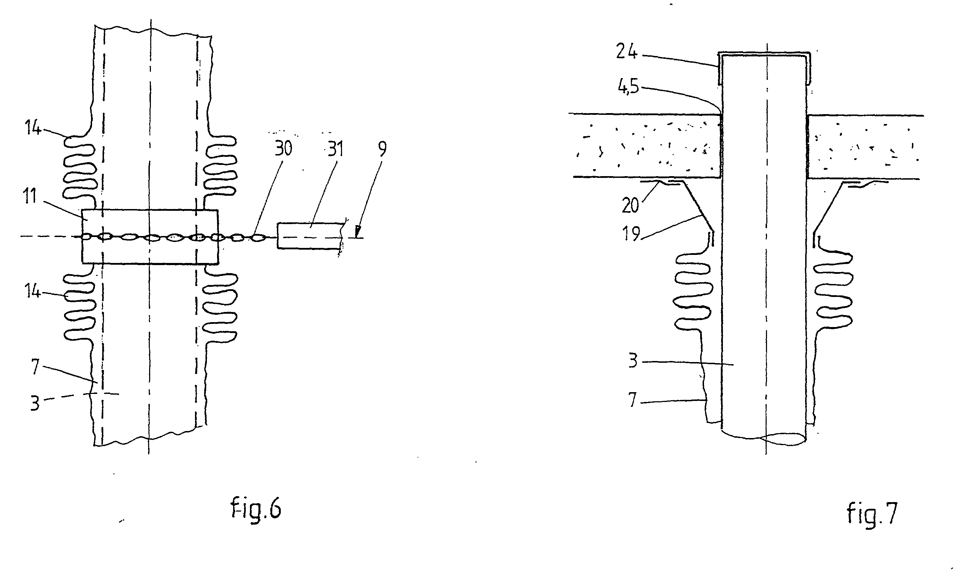

In the manner shown in Fig. 4 a severing or adhering sleeve is first arranged in the region of the two severing zones. These are designated schematically in Fig. 2 with respectively 10 and 11. It will be apparent that these sleeves are only designated schematically and consist of a more or less annular bag with end flanges 12, 13 which can be connected dust-tightly to tube 3 for instance by means of adhesive tape. The whole inner surface of the sleeve can also be attached adheringly to tube 3 by means of an adhesive layer. As shown in Fig. 4, the foil envelopes 7, 14 are likewise connected dust-tightly to sleeve 11 by means of adhesive tape. Sleeves 10, 11 are hollow and filled with a viscous substance 15 which is able to bind asbestos particles possibly released during the cutting operation. This cutting operation is shown schematically in Fig. 6. Once the situation shown in Fig. 4 has been realized, tube 3 is severed through sleeve 11 along severing zone 9 by means of a cutting chain 30 with hardened steel cutting wheels which is driven by a drive device 31. Cutting through the severing zone 8 takes place in the same manner, whereby the tube part 3' between severing zones 8 and 9 is released and can be disposed of.

Fig. 5 shows the manner in which the bellows-like additional quantity of foil, designated 16 in Fig. 2, can be used to form a foil part which extends over the free end of tube part 3' and which can be tied in a knot or sealed by means of a cord or the like 17. The same process is carried out on the underside of tube part 3', whereby it will be apparent that tube part 3', completely wrapped in plastic foil, can be disposed of in dust-free manner.

There are now two options in respect of the remaining upper tube stub 18. In the manner shown in Fig. 2 and 4 use is made here too of additional foil material which can be used in the manner of a bellows, after forming of the cut in the manner shown in Fig. 5, for dust-free sealing of tube stub 18 and subsequently, after removal thereof from bore 5, for dust-free disposal thereof. It is however not always possible to have this disposal take place easily and in dust-free manner. This is only possible if the tube stub is completely straight on the upper side and is not fixed in bore 5, or hardly so. If this is the case, other measures have to be taken.

Fig. 7 shows that at the join between tube 3 and ceiling 2 there is placed a conical cap 19 which is connected for instance by adhesive tape 20 to ceiling 2 and, if necessary, also to tube 3. As shown in Fig. 2, a connecting member 21 is placed on the underside of tube 3 under floor 1, which member has on one side a passage for loose pieces to which a bag 22 is connected, while on the side a tube stub 23 serves for connecting a vacuum cleaner (not shown). Bag 22 can optionally, and under determined conditions, be dispensed with. The cutting operations are carried out under all conditions with connected vacuum cleaner in order to ensure with certainty that no asbestos particles can escape into the environment.

The disposal of the tube stubs at the bottom and top remaining after removal of tube part 3' will be discussed hereinbelow.

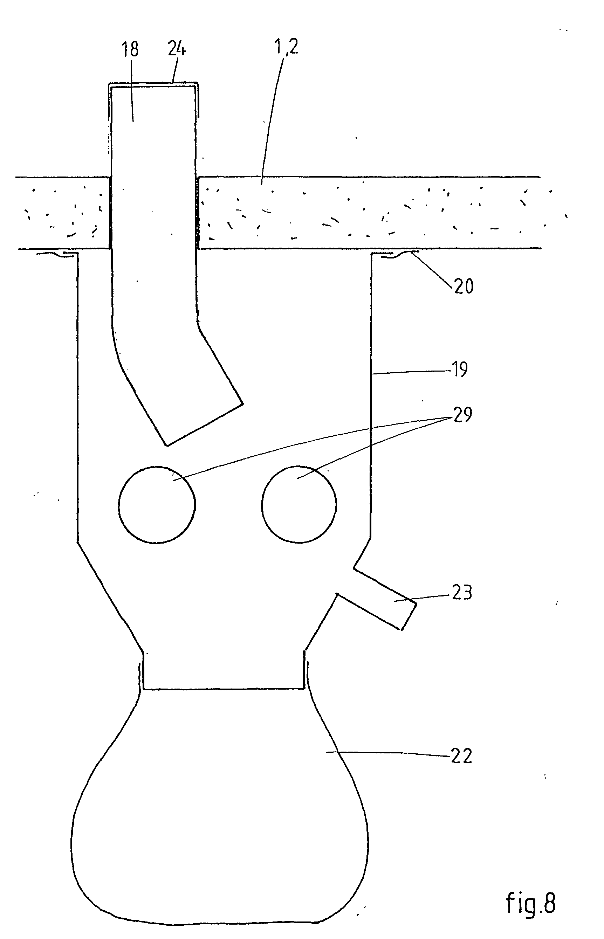

It is further noted in respect of Fig. 8 that, prior to disposal of upper tube stub 18, this tube stub is covered on its top side with a protective cap 24.

Fig. 3 shows a situation comparable to Fig. 2 in which the inclining tube 6 has to be removed. Use is also made here of a lower severing sleeve 10 and an upper severing sleeve 11, wherein sleeve 10 is situated slightly closer to the floor 1 than in Fig. 2, while severing sleeve 11 is situated in the inclining part instead of the vertical part. All operations are otherwise the same as those already set forth on the basis of the processing of tube 3. Fig. 3 shows that a vacuum cleaner 25 is connected to tube stub 23.

After removal of tube part 6' in the same way as tube part 3', the remaining tube stubs extending respectively through the floor and the ceiling must be removed.

Fig. 8 shows the way in which this removal can take place in dust-free manner. The removal of upper tube stub 18 is shown by way of example. Use is made for this purpose of a work casing 19, preferably of transparent material, which work casing 19 is attached temporarily to ceiling 2 by means of adhesive tape 20 such that it extends around tube stub 26 and conical cap 19. Collecting bag 22 is connected to the underside of work casing 27 and a vacuum cleaner 25 (not drawn) is connected to a tube stub 23. Large pieces are collected in the bag, while the vacuum cleaner serves to draw off finer particles and dust, in particular asbestos fibres. The hands can be inserted, preferably sealingly, via working holes 29 to remove tube stub 18. An attempt will first be made to dislodge it from bore 5 by careful jiggling. If this is not successful or not wholly successful, the tube stub must be made smaller, for instance with a hacking action using a tool. The pieces are collected in bag 22 while the fine dust and asbestos fibres are drawn off by vacuum cleaner 25.

It will be apparent that the examples given above are only illustrations of possible embodiments and that many variants are possible within the scope of the invention as defined in the claims.

## Claims

1. Method for removing a tube (1;6) containing asbestos from a building structure (1,2)in dust-free manner, which method comprises the following steps, to be performed in suitable sequence, of:
(a) connecting a vacuum cleaner (25) to the tube (1;6) and setting into operation thereof;
(b) wrapping the tube (1;16) over the whole free length thereof with dustproof foil material (7,14)and adhering this foil material (7,14) dust-tightly to the tube (1;6) at least at the ends of this free length;
(c) choosing at least one severing zone (8;9) at least in the region of one of said ends where the tube (1;6) has to be cut through such that a tube part (18) defined by the relevant severing zone (9) and another zone where the tube can be detached from its environment, for instance a second severing zone (8), can be removed and disposed of;
(d) adhering to the tube around each severing zone (8;9) a severing sleeve (11,10) comprising an envelope filled with a sticky material (15) such that the severing sleeve (11,10) is connected dust-tightly to the tube above and below each severing zone (9,8);
(e) after step (d), cutting wholly through the tube (3) and the severing sleeve (11,10) in each severing zone (8;9) and removing each tube part (6') between two cut-through severing zones.

2. Method as claimed in claim 1, comprising the step of
(f) arranging a dust cap (19) over at least one open end of the tube (18) prior to step (e).

3. Method as claimed in claim 1, comprising the step of
(g) performing step (b) such that the foil material (16) has an additional length in the region of each severing (9,8) zone, and that the relevant additional foil material (16) is used during removal of the relevant tube part (6') as according to step (e) to seal the relevant free end completely and dust-tightly.

4. Method as claimed in claim 1, comprising the step of
(h) performing step (e) with a cutting head (30) comprising a rotatingly driven ring of metal cutting wheels.

5. Method as claimed in claim 1, comprising the step of
(i) performing step (d) such that the severing sleeve (11,10) consists of a hollow flexible ring with a filling of foam material which is impregnated with a sticky substance (15).

6. Method as claimed in claim 1, comprising the step of
(j) cleaning a tube part (18, 6'), or at least the inner surface thereof, prior to the disposal thereof, for instance by means of the vacuum cleaner (15) used in step (a).

7. Method as claimed in claim 1, comprising the step of
(k) performing step (a) while applying a T-piece optionally provided with a valve, for instance a slide valve, for connecting a waste bag (22) to the underside of the tube, whereby, after use of the vacuum cleaner (25) and the removal of an abutting tube part, tube remnants can be hacked away or otherwise dislodged and collected in the waste bag (22).

## Patentansprüche

1. Verfahren zum Entfernen eines Rohres (1; 6), das Asbest enthält, von einer Gebäudestruktur (1, 2) auf staubfreie Weise, welches Verfahren die folgenden in geeigneter Reihenfolge durchzuführenden Schritte aufweist:
(a) einen Staubsauger (25) mit dem Rohr (1; 6) zu verbinden und denselben in Betrieb zu setzen;
(b) das Rohr (1; 6) über den gesamten freien Längenabschnitt desselben mit staubdichtem Folienmaterial (7, 14) zu umwickeln und dieses Folienmaterial (7, 14) staubdicht am Rohr (1; 6) wenigstens an den Enden dieses freien engen Abschnitts anzukleben;
(c) wenigstens eine Abtrennzone (8; 9) wenigstens im Bereich einer der Enden auszuwählen, wo das Rohr (1; 6) durchgeschnitten werden soll, so dass ein Rohrteil (18) der durch die betreffende Abtrennzone (9) und eine andere Zone definiert ist, wo das Rohr von seiner Umgebung gelöst werden kann, z. B. eine zweite Abtrennzone (8), entfernt und entsorgt werden kann;
(d) am Rohr um jede Abtrennzone (8; 9) herum eine Abtrennhülse (11, 10) anzukleben, die eine Umhüllung aufweist, die mit einem klebrigen Material (15) gefüllt ist, so dass die Abtrennhülse (11, 10) staubdicht mit dem Rohr oberhalb und unterhalb jeder Abtrennzone (9, 8) verbunden ist;
(e) nach Schritt (d) das Rohr (3) und die Abtrennhülse (11, 10) in jeder Abtrennzone (8; 9) völlig durchzuschneiden und jeden Rohrteil (6') zwischen zwei durchgeschnittenen Abtrennzonen zu entfernen.

2. Verfahren nach Anspruch 1, das den Schritt aufweist
(f) eine Staubkappe (19) über wenigstens ein offenes Ende des Rohrs (18) vor Schritt (e) anzuordnen.

3. Verfahren nach Anspruch 1, das den Schritt aufweist,
(g) Schritt (b) so durchzuführen, dass das Folienmaterial (16) eine zusätzliche Länge im Bereich jeder Abtrennzone (9, 8) hat und dass das entsprechende zusätzliche Folienmaterial (16) während des Entfernens des entsprechenden Röhrenteils (6') wie gemäß Schritt (e) verwendet wird, um das entsprechende freie Ende vollständig und staubdicht abzudichten.

4. Verfahren nach Anspruch 1, das den Schritt aufweist
(h) Schritt (e) mit einem Schneidkopf (30) durchzuführen, der einen drehend angetriebenen Ring von Metallschneidrädern aufweist.

5. Verfahren nach Anspruch 1, das den Schritt aufweist
(i) Schritt (d) so durchzuführen, dass die Abtrennhülse (11, 10) aus einem hohlen flexiblen Ring mit einer Füllung von Schaummaterial besteht, das mit einer klebrigen Substanz (15) imprägniert ist.

6. Verfahren nach Anspruch 1, das den Schritt aufweist:
(j) einen Rohrteil (18, 6') oder wenigstens die innere Oberfläche desselben vor dem Entsorgen desselben zu reinigen, z. B. mit Hilfe des Staubsaugers (15), der in Schritt (a) verwendet wird.

7. Verfahren nach Anspruch 1, das den Schritt aufweist
(k) Schritt (a) durchzuführen, während ein T-Stück, das optional mit einem Ventil versehen ist, z. B. einem Gleitventil, zum Verbinden eines Abfallsacks (22) mit der Unterseite des Rohres angebracht wird, wobei nach Benutzung des Staubsaugers (25) und dem Entfernen des angrenzenden Rohrteils Rohrreste weggehackt oder sonstwie von ihrem Platz entfernt und im Abfallsack (22) gesammelt werden können.

## Revendications

1. Procédé pour déposer un tube (1 ; 6) contenant de l'amiante depuis une structure de bâtiment (1,2) en éliminant la poussière de celui-ci, lequel procédé comprend les étapes suivantes, à exécuter dans l'ordre approprié, de :
(a) raccordement d'un aspirateur (25) au tube (1 ; 6) et actionnement de celui-ci ;
(b) enveloppage du tube (1;16) sur toute la longueur libre de celui-ci avec un matériau d'aluminium étanche à la poussière (7,14) et collage de ce matériau d'aluminium (7,14) d'une manière étanche à la poussière (1;6) au moins aux extrémités de cette longueur libre ;
(c) choix d'au moins une zone de découpage (8;9) au moins dans la région de l'une desdites extrémités où le tube (1; 6) doit être découpé, de façon à ce qu'une partie du tube (18) délimitée par la zone de découpage concernée (9) et par une autre zone où le tube peut être détaché de son environnement, par exemple une seconde zone de découpage (8), puisse être déposée et éliminée ;
(d) collage sur le tube, autour de chaque zone de découpage (8;9) d'un manchon de découpage (11,10) comprenant une enveloppe remplie d'un matériau collant (15) de façon à ce que le manchon de découpage (11,10) soit raccordé d'une manière étanche à la poussière au-dessus et au-dessous de chaque zone de découpage (9,8) ;
(e) après l'étape (d), tronçonnage complet au travers du tube (3) et du manchon de découpage (11,10) dans chaque zone de découpage (8;9) et dépose de chaque partie du tube (6') entre les deux zones de découpage sectionnées.

2. Procédé selon la revendication 1, comprenant l'étape de
(f) montage d'un capuchon antipoussière (19) sur au moins une extrémité ouverte du tube (18) avant l'étape (e).

3. Procédé selon la revendication 1, comprenant l'étape de
(g) exécution de l'étape (b) de façon à ce que le matériau d'aluminium (16) présente une longueur supplémentaire dans la région de chaque zone de découpage (9,8), et que le matériau d'alumium concerné (16) soit utilisé durant la dépose de la partie de tube concernée (6') selon l'étape (e) pour fermer l'extrémité libre complètement et d'une manière étanche à la poussière.

4. Procédé selon la revendication 1, comprenant l'étape de
(h) exécution de l'étape (e) avec une tête de coupe (30) comprenant un anneau, actionné en rotation, de roues de tronçonnage de métal.

5. Procédé selon la revendication 1, comprenant l'étape de
(i) exécution de l'étape (d) de telle sorte que le manchon de découpage (11,10) consiste en une bague creuse flexible remplie d'une mousse qui est imprégnée d'une substance collante (15).

6. Procédé selon la revendication 1, comprenant l'étape de
(j) nettoyage d'une partie du tube (18, 6'), ou au moins de la surface interne de celle-ci, avant d'éliminer celle-ci, par exemple au moyen de l'aspirateur (15) utilisé à l'étape (a).

7. Procédé selon la revendication 1, comprenant l'étape de
(k) exécution de l'étape (a) tout en appliquant une pièce en T comportant facultativement une soupape, par exemple une soupape coulissante, pour le raccordement d'un sac à rebuts (22) à la face antérieure du tube, de manière à ce que, après utilisation de l'aspirateur (25) et dépose de la partie de tube adjacente, les restes du tube puissent être détachés ou délogés d'une quelconque autre manière, et recueillis dans le sac à rebuts (22).
